(19) Europäisches Patentamt
European Patent Office
Office européen des brevets

(11) **EP 3 021 502 A1**

(12) **EUROPEAN PATENT APPLICATION**
published in accordance with Art. 153(4) EPC

(43) Date of publication:
**18.05.2016 Bulletin 2016/20**

(51) Int Cl.:
***H04B 17/00*** (2015.01)

(21) Application number: **13888942.3**

(86) International application number:
**PCT/CN2013/079281**

(22) Date of filing: **12.07.2013**

(87) International publication number:
**WO 2015/003382 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Lee, Wen-Sung**
**Taichung City 40861 (TW)**

(72) Inventor: **Lee, Wen-Sung**
**Taichung City 40861 (TW)**

(74) Representative: **Cabinet Chaillot**
**16/20, avenue de l'Agent Sarre**
**B.P. 74**
**92703 Colombes Cedex (FR)**

(54) **INTELLIGENT HOME POSITIONING SYSTEM AND POSITIONING METHOD THEREFOR**

(57)     A positioning system adapted to be assembled in an enclosed space, includes a positioning device having a directional arithmetic unit and a positional arithmetic unit; and a plurality of sensors, each sensor electrically connected to the directional arithmetic unit and the positional arithmetic unit of the positioning device. Under this arrangement, the directional arithmetic unit and the positional arithmetic unit of the positioning device accurately measures a current position of an object in the enclosed space, via a time difference between the sensors and an output value of a voltage of each sensor.

FIG.1

**Description**

BACKGROUND OF THE INVENTION

1. Field of the Invention

The present invention relates to a positioning system and a method thereof, and more particularly to a positioning system and a method thereof for an object at home.

2. Description of Related Art

A conventional positioning system includes a ground pad, a central control unit and a self power generating unit. The ground pad is configured to detect a moving target and output an electrical control signal. The central processing unit is configured to transport a control command based on the electrical control signal. The self power generating unit is configured to transform the kinetic energy of the moving target to the electricity and provide power to the ground pad and the central control unit. Based on the location distribution of the moving target, the invention can make a functional range of an electronic device cover the moving target through the control command set forth above. Therefore, the invention can generate power through the kinetic energy and intelligently control the electronic device.

However, if the moving target is not on the ground pad, the ground pad cannot detect the moving target; in other words, the conventional positioning system is not functional.

The present invention has arisen to mitigate and/or obviate the disadvantages of the conventional.

SUMMARY OF THE INVENTION

The main objective of the present invention is to provide an improved positioning system.

To achieve the objective, a positioning system adapted to be assembled in an enclosed space, comprises a positioning device having a directional arithmetic unit and a positional arithmetic unit; and a plurality of sensors, each sensor electrically connected to the directional arithmetic unit and the positional arithmetic unit of the positioning device. Under this arrangement, the directional arithmetic unit and the positional arithmetic unit of the positioning device accurately measures a current position of an object in the enclosed space, via a time difference between the sensors and an output value of a voltage of each sensor.

A method of the positioning system comprises directional searching step: the directional arithmetic unit calculates an angle between the object and each sensor via a distance parameter between each two adjacent sensors and a speed parameter of the object; and positional searching step: the positional arithmetic unit measures a position of the object relative to at least three sensors, via an output ADC voltage from three adjacent sensors. Wherein, the object is a heat source or an IR. Under this arrangement, said steps accurately measure a current position of an object in an enclosed space.

Further benefits and advantages of the present invention will become apparent after a careful reading of the detailed description with appropriate reference to the accompanying drawings.

BRIEF DESCRIPTION OF THE DRAWINGS

Fig. 1 is a block chart for a positioning system of the present invention;
Fig. 2 is a block chart for a method of the positioning system;
Figs. 3-4 are diagrams for showing a detecting region of the present invention;
Fig. 5 is a diagram for showing a directional searching step; and
Fig. 6 is a diagram for showing a positional searching step.

DETAILED DESCRIPTION OF THE INVENTION

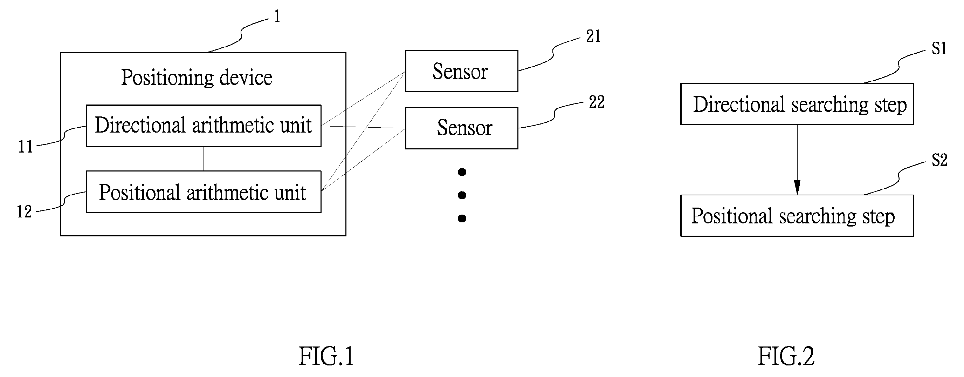

Referring to Figs. 1-5, a positioning system for an object at home in accordance with the present invention comprises a positioning device 1 and a plurality of sensors 21, 22, 23, 24 and 25. The positioning device 1 has a directional arithmetic unit 11 and a positional arithmetic unit 12. Each sensor 21, 22, 23, 24 or 25 is a PIR (Passive Infra-Red) sensor. Each sensor 21, 22, 23, 24 or 25 is electrically connected to the directional arithmetic unit 11 and the positional arithmetic unit 12 of the positioning device 1. Specially, the directional arithmetic unit 11 and the positional arithmetic unit 12 of the positioning device 1 accurately measures a current position of an object in an enclosed space 10, via a time difference between the sensors 21, 22, 23, 24 and 25 and an output value of a voltage of each sensor 21, 22, 23, 24 or 25. The object is a heat source or an IR.

Referring to Fig. 2, a method of the positioning system as above description comprises a directional searching step S1 and a positional searching step S2. In regards to the directional searching step S1, the directional arithmetic unit 11 calculates an angle between the object and each sensor 21, 22, 23, 24 or 25 via a distance parameter between each two adjacent sensors 21, 22, 23, 24 and 25, and a speed parameter of the object. In regards to the positional searching step S2, the positional arithmetic unit 12 measures a position of the object relative to at least three sensors 21, 22, 23, 24 and 25, via an output ADC (Analog / Digital Converter) voltage from three adjacent sensors 21, 22, 23, 24 and 25. Under this arrangement, the positioning device 1 accurately measures a current position of an object in an enclosed space 10 via said steps; wherein, the object is a heat source or an IR.

The present invention can cooperate with an electric device. For example, the present invention controls the electric device according to a position and an identity of a person in a house, so as to fit an operation of the electric device for the person. In addition, the present invention can accurately measure a current position and a moving direction of the person for monitoring purpose.

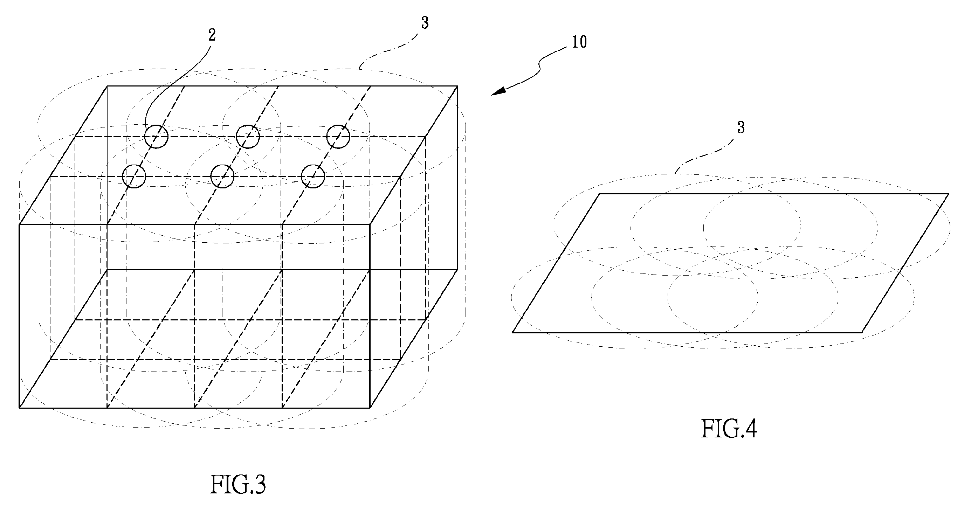

Referring to Figs. 3-4, Fig. 3 shows the enclosed space 10, the sensors 21, 22, 23, 24 and 25 and a sensed area 3. Fig. 4 shows the sensed area 3 with a two-dimensional manner. The sensors 21, 22, 23, 24 and 25 are assembled at a ceiling and are spaced from each other.

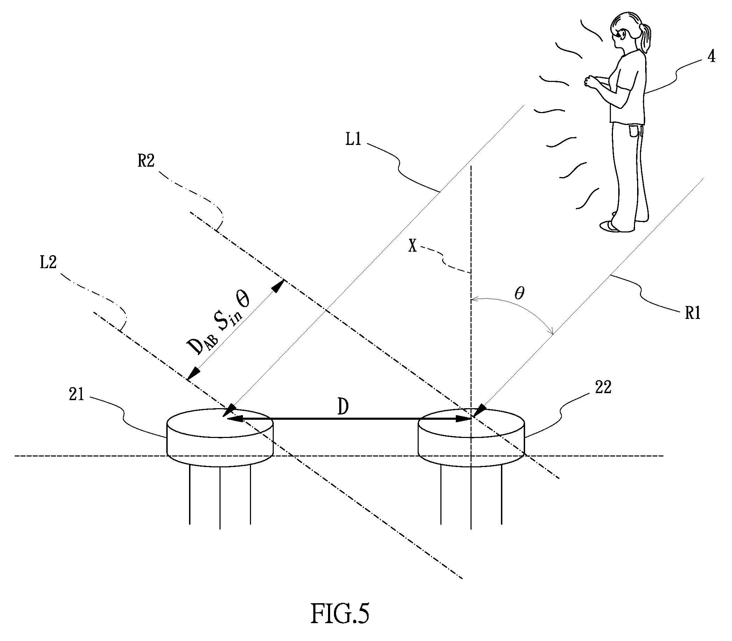

Clearly, the directional arithmetic unit 11 measures a moving direction of a sensed object 4. The sensed object 4 is a heat source or a person. Referring to Fig. 5, there are two sensors 21 and 22. One sensor 21 is located at a left side of the enclosed space 10 and is a PIR_A. Another sensor 22 is located at a right side of the enclosed space 10 and is a PIR_B. The sensed object 4 is located at a top right side relative to the sensors 21 and 22. Another sensor 22 is located at right side relative to one sensor 21. Another sensor 22 defines a central axis X. The central axis X passes through another sensor 22. A first right thermo wave R1 is defined from the sensed object 4 to another sensor 22. The first right thermo wave R1 meets the central axis X at a top end of another sensor 22. Another sensor 22 defines a second right thermo wave R2. The first right thermo wave R1 is symmetrical to the second right thermo wave R2 relative to the central axis X. An angle θ is defined by the first right thermo wave R1 and the central axis X. A first left thermo wave L1 is defined from the sensed object 4 to one sensor 21. One sensor 21 defines a second left thermo wave L2. The first left thermo wave L1 is symmetrical to the second left thermo wave L2. A distance D ($D_{AB}$) is defined between the sensors 21 and 22. A distance between the second left thermo wave L2 and the second right thermo wave R2 is defined as $D_{AB}\sin\theta$. A relationship between the distance D ($D_{AB}$) and a sample rate is defined as following:

$$\frac{D_{AB}\sin\theta}{v_1} > \frac{1}{Sample\ Rate.}$$

Wherein, the sensors 21 and 22 search the sensed object 4 at a speed. Said speed is defined as v; the sample rate is constant. The sensors 21 and 22 define a delay time (Delay). The angle θ can be calculated to measure the moving direction of the sensed object 4; the function is shown as following:

$$\theta = \sin^{-1}\left(\frac{Delay * v}{D_{AB}}\right)$$

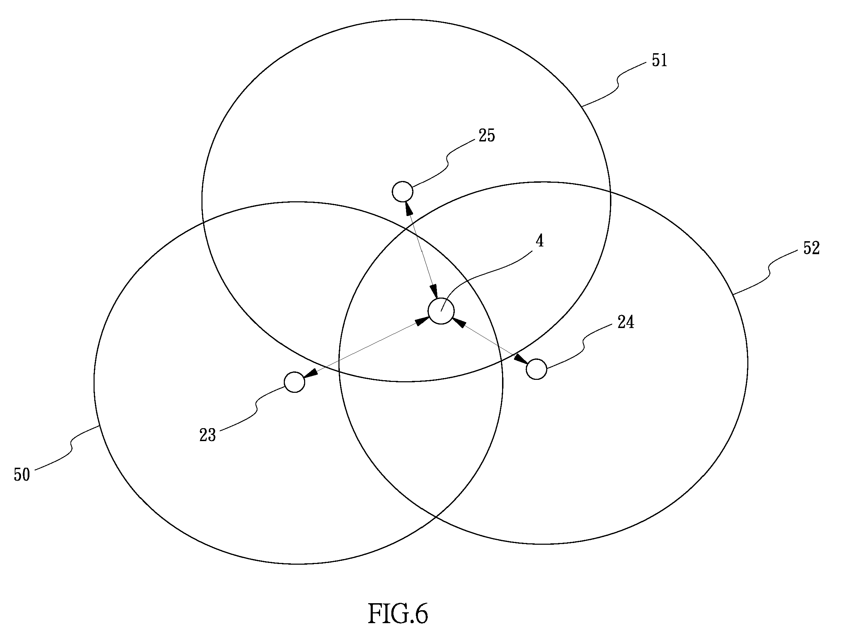

Referring to Fig. 6, the sensors 21, 22, 23, 24 and 25 correspond to a wave (about 10mm) from a heat source of a human body, so that the output ADC voltage from each sensor 21, 22, 23, 24 or 25 depends on a distance between the person and each sensor 21, 22, 23, 24 or 25. When the output ADC voltage from each sensor 21, 22, 23, 24 or 25 is defined as a distance parameter, the positioning device 1 searches a position of the person via three sensors 23, 24 and 25. Clearly, the three sensors 23, 24 and 25 enclose the sensed object 4. The three sensors 23, 24 and 25 respectively define a first sensing region 50, a second sensing region 51 and a third sensing region 52. The coordinate positions of the three sensors 23, 24 and 25 are respectively $(X_A, Y_A)$, $(X_B, Y_B)$ and $(X_C, Y_C)$. The coordinate position of the sensed object 4 is $(X_0, Y_0)$. A distance between the sensor 23 and the sensed object 4 is $D_{AO}$. A distance between the sensor 24 and the sensed object 4 is $D_{BO}$. A distance between the sensor 25 and the sensed object 4 is $D_{CO}$. The function for the position of the sensed object 4 is defined as following:

$$D_{AO} = \sqrt{(x_A - x_O)^2 + (y_A - y_O)^2}$$

$$D_{BO} = \sqrt{(x_B - x_O)^2 + (y_B - y_O)^2}$$

$$D_{CO} = \sqrt{(x_C - x_O)^2 + (y_C - y_O)^2}$$

The follows shows how the function is figured out.

$$D_{AO} = \sqrt{(x_A - x_O)^2 + (y_A - y_O)^2}$$
$$D_{BO} = \sqrt{(x_B - x_O)^2 + (y_B - y_O)^2}$$
$$D_{CO} = \sqrt{(x_C - x_O)^2 + (y_C - y_O)^2}$$

$$\downarrow$$

$$D_{AO} - D_{BO} = \sqrt{(x_A - x_O)^2 + (y_A - y_O)^2} - \sqrt{(x_B - x_O)^2 + (y_B - y_O)^2}$$
$$D_{AO} - D_{CO} = \sqrt{(x_A - x_O)^2 + (y_A - y_O)^2} - \sqrt{(x_C - x_O)^2 + (y_C - y_O)^2}$$

$$\downarrow$$

$$D_{AO}^2 - D_{BO}^2 = -2x_A x_O - 2y_A y_O - x_B^2 - y_B^2 + 2x_B x_O + 2y_B y_O + x_A^2 + y_B^2$$
$$D_{AO}^2 - D_{CO}^2 = -2x_A x_O - 2y_A y_O - x_C^2 - y_C^2 + 2x_C x_O + 2y_C y_O + x_A^2 + y_C^2$$

$$\downarrow$$

$$\begin{bmatrix} D_{AO}^2 - D_{BO}^2 + (x_B^2 + y_B^2 - x_A^2 - y_A^2) \\ D_{AO}^2 - D_{CO}^2 + (x_C^2 + y_C^2 - x_A^2 - y_A^2) \end{bmatrix} = \begin{bmatrix} 2(x_B - x_A) & 2(y_B - y_A) \\ 2(x_C - x_A) & 2(y_C - y_A) \end{bmatrix} \begin{bmatrix} x_O \\ y_O \end{bmatrix}$$

$$\downarrow$$

$$\begin{bmatrix} D_{1O}^2 - D_{2O}^2 + (x_2^2 + y_2^2 - x_1^2 - y_1^2) \\ \vdots \\ D_{1O}^2 - D_{NO}^2 + (x_N^2 + y_N^2 - x_1^2 - y_1^2) \end{bmatrix} = \begin{bmatrix} 2(x_2 - x_1) & 2(y_2 - y_1) \\ \vdots & \vdots \\ 2(x_N - x_1) & 2(y_N - y_1) \end{bmatrix} \begin{bmatrix} x_O \\ y_O \end{bmatrix}$$

$$\downarrow$$

$$\overline{A} = \begin{bmatrix} 2(x_2 - x_1) & 2(y_2 - y_1) \\ \vdots & \vdots \\ 2(x_N - x_1) & 2(y_N - y_1) \end{bmatrix}$$

$$\downarrow$$

$$\overline{B} = \begin{bmatrix} D_{1O}^2 - D_{2O}^2 + (x_2^2 + y_2^2 - x_1^2 - y_1^2) \\ \vdots \\ D_{1O}^2 - D_{NO}^2 + (x_N^2 + y_N^2 - x_1^2 - y_1^2) \end{bmatrix}$$

$$\begin{bmatrix} x_O \\ y_O \end{bmatrix} = (\overline{A}^T \overline{A})^{-1} * (\overline{A}^T \overline{B})$$

Although the invention has been explained in relation to its preferred embodiment, it is to be understood that many other possible modifications and variations can be made without departing from the spirit and scope of the invention as hereinafter claimed.

## Claims

1.  A positioning system adapted to be assembled in an enclosed space, comprising:

    a positioning device having a directional arithmetic unit and a positional arithmetic unit; and
    a plurality of sensors, each sensor electrically connected to the directional arithmetic unit and the positional arithmetic unit of the positioning device;
    wherein, the directional arithmetic unit and the positional arithmetic unit of the positioning device accurately measures a current position of an object in the enclosed space, via a time difference between the sensors and an output value of a voltage of each sensor.

2.  A method of the positioning system as claimed in claim 1, comprising:

    directional searching step: the directional arithmetic unit calculates an angle between the object and each sensor via a distance parameter between each two adjacent sensors and a speed parameter of the object; and
    positional searching step: the positional arithmetic unit measures a position of the object relative to at least three sensors, via an output ADC voltage from three adjacent sensors;
    wherein, said steps accurately measure a current position of an object in an enclosed space.

3.  The method as claimed in claim 2, wherein the object is a heat source or an IR.

EP 3 021 502 A1

Positioning device — 1

Directional arithmetic unit — 11

Positional arithmetic unit — 12

Sensor — 21

Sensor — 22

•
•
•

FIG.1

Directional searching step — S1

Positional searching step — S2

FIG.2

FIG.3

FIG.4

EP 3 021 502 A1

FIG.5

EP 3 021 502 A1

FIG.6

# INTERNATIONAL SEARCH REPORT

| International application No. |
|---|
| PCT/CN2013/079281 |

### A. CLASSIFICATION OF SUBJECT MATTER

H04B 17/00 (2006.01) i

According to International Patent Classification (IPC) or to both national classification and IPC

### B. FIELDS SEARCHED

Minimum documentation searched (classification system followed by classification symbols)

H04B; G01S; H04L; G05B; G10L; H04W

Documentation searched other than minimum documentation to the extent that such documents are included in the fields searched

Electronic data base consulted during the international search (name of data base and, where practicable, search terms used)

CNABS, CNKI, WPI, EPODOC: intelligent, home, locat+, voltage, time, distance, angle, sens+, user, human, mat, indoor

### C. DOCUMENTS CONSIDERED TO BE RELEVANT

| Category* | Citation of document, with indication, where appropriate, of the relevant passages | Relevant to claim No. |
|---|---|---|
| X | CN 101547048 A (JIAXING CENTER MICROSYSTEM BRANCH OF CAS) 30 September 2009 (30.09.2009) | 1-3 |
| A | CN 102117062 A (QINGDAO HAIER SOFTWARE CO LTD) 06 July 2011 (06.07.2011) | 1-3 |
| A | CN 102984039 A (HONGFUJIN PRECISION INDUSTRY (SHENZHEN) CO LTD et al.) 20 March 2013 (20.03.2013) | 1-3 |
| A | US 2010332235 A1 (DAVID, ABRAHAM BEN) 30 December 2010 (30.12.2010) | 1-3 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 April 2014 | 18 April 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WU, Wenchen Telephone No. (86-10) 62414445 |
|---|---|

Form PCT/ISA /210 (second sheet) (July 2009)

**INTERNATIONAL SEARCH REPORT**
Information on patent family members

International application No.

PCT/CN2013/079281

| Patent Documents referred in the Report | Publication Date | Patent Family | Publication Date |
|---|---|---|---|
| CN 101547048 A | 30 September 2009 | None | |
| CN 102117062 A | 06 July 2011 | None | |
| CN 102984039 A | 20 March 2013 | None | |
| US 2010332235 A1 | 30 December 2010 | WO 2011001370 A1 | 06 January 2011 |
| | | GB 2483814 A | 21 March 2012 |

Form PCT/ISA /210 (patent family annex) (July 2009)